# EUROPEAN PATENT SPECIFICATION

(11) **EP 2 677 484 B1**
(45) Date of publication and mention of the grant of the patent: **19.07.2017**
(21) Application number: 12172465.2
(22) Date of filing: 18.06.2012
(51) Int. Cl.: G06Q 30/02

(54) **System and method for making personalised recommendations to a user of a mobile computing device, and computer program product**
System und Verfahren zur Abgabe personalisierter Empfehlungen für einen Benutzer einer mobilen Computervorrichtung und Computerprogramm
Système et procédé de proposition de recommandations personnalisées à un utilisateur d'un dispositif informatique mobile et produit de programme informatique

(43) Date of publication of application: 25.12.2013
(73) Proprietor: Sentiance, 2018 Antwerpen (BE)
(72) Inventor: Maertens, Filip, 8700 Tielt (BE)
(74) Representative: Sarlet, Steven Renaat Irène

(56) References cited:
- US-A1- 2004 153 373
- US-A1- 2011 131 077
- US-B1- 7 720 720

## Description

### Technical field

The invention relates to a system for making personalised recommendations to a user of a mobile computing device. The invention further relates to a method for making personalised recommendations to a user of a mobile computing device. The invention also relates to a computer program product.

Preferably, the following disclosure relates generally to techniques for facilitating user interactions based on preference or behaviour, such as to provide functionality to profiled groups of users.

### Background

Mobile computing devices, such as mobile phones and smart phones, have recently gained a strong popularity. Many persons carry a mobile computing device with them. More recently, a trend has started towards personalisation of information to a user of a mobile computing device. As part of such personalisation, users are being profiled, i.e. a profile is attributed to a user. For example, some advertisements offered to a user of a mobile computing device have been personalised based on surfing behaviour of the user on the internet by means of the mobile computing device.

Known profiling efforts of internet users is based on user-generated content. This is done e.g. by explicitly indicating a preference using a Facebook-"Like" type of preference-indicators, or by entering user-generated search queries, as is e.g. done by means of Google-type search interfaces. However, such profiling is not always accurate. Such profiling may e.g. not be capable of correcting biased user-generated data, and hence be non-evolutionary.

From US 2011/131077 A1, a context-aware recommendation module is known. The context information used pertains to at least one environmental factor that has a bearing on the relevancy of recommended items (such as location, time, etc.). The recommendation module then produces a ranked set of items, selected from among the initial set of items, based on a user's past preference, using two or more recommendation models.

From US 2004/153373 A1, context-aware service recommender system is known, wherein a user's mobile device receives context events from smart environments in which the mobile device is operating.

### Summary

It is therefore an objective to enable making improved personalised recommendations to a user of a mobile computing device.

This objective is achieved according to the invention as defined in the independent claims.

According to an aspect, there is provided a system for making personalised recommendations to a user of a mobile computing device, the system comprising at least one mobile computing device used by said user, comprising a central processing unit, and comprising, or having access to, a memory structure comprising a dataset of personalised data personalised to said user, the at least one mobile computing device being provided with a plurality of sensors arranged for collecting contextual data, the central processing unit comprising a receiver or receiving means for receiving said collected contextual data, the central processing unit further being arranged for combining information from the personalised dataset with the received contextual data, in order to obtain a personalised recommendation for the user of the mobile computing device, the central processing unit further being provided with a transmitter that is, or with transmitting means that are, arranged for transmitting the personalised recommendation to the user of the mobile computing device, in particular to the at least one mobile computing device used by said user. The central processing unit is arranged for checking follow-up of the transmitted recommendation by the user by comparing the transmitted recommendation with contextual data received by the central processing unit after transmitting the recommendation, and wherein the central processing unit is further arranged for basing a further recommendation at least partly on said checked follow-up.

Thus, the central processing unit may be provided with a self-learning algorithm. As the system may enable checking the follow-up of recommendations and thus may enable checking, at least partly, real behaviour of the user, a bias of recommendations towards assumed preferences instead of real preferences may be decreased. According to an aspect, a self-correcting, or, in other words, self-learning system and method for context-based user interactions may provided, preferably using collaborative and/or opportunistic mobile sensing.

According to an aspect, a method is provided for making personalised recommendations to a user of a mobile computing device, said device being comprised by a system that further comprises a central processing unit and that comprises, or has access to, a memory structure comprising a dataset of personalised data personalised to said user, the method comprising the steps : - collecting contextual data by means of a plurality of sensors with which the mobile computing device is provided; - receiving said collected contextual data by means of a receiver or receiving means of the central processing unit; - combining, by means of the central processing unit, information from the personalised dataset with the received contextual data, in order to obtain a personalised recommendation for the user of the mobile computing device; and - transmitting the personalised recommendation to the user of the mobile computing device, in particular to the at least one mobile computing device used by said user, by means of a transmitter or transmitting means with which the central processing unit is provided. Preferably, the method comprises the steps: - checking, by means of the central processing unit, follow-up of the transmitted recommendation by the user, by comparing the transmitted recommendation with contextual data received by the central processing unit after transmitting the recommendation; and - basing, by means of the central processing unit, a further recommendation at least partly on said checked follow-up.

The inventor realised that the increasing popularity of mobile computing devices such as smart-phones, with their embedded sensing capability, and the availability of new application distribution channels, have led to a situation where an opportunity exists to tap into the data sets of contextual data that can be created by analyzing the sensory data of mobile users. The inventor further recognised that such contextual data can be advantageously used for building an evolutionary preference model of a user. Thus, smart-phones can be used as interconnected sensory devices, rather than devices that are only used to make phone-calls with, or read electronic mail with.

Preferably, at least one sensor of said plurality of sensors is arranged for collecting observational data. Thus, the contextual data comprise observational data. Such observational data may decrease a probability for biased recommendations. Values of such observational data are rather objective and usually free from psychological influences of the user.

In an embodiment, the plurality of sensors comprises a GPS sensor, an ambient sound sensor, an accelerometer, a digital compass, a gyroscope, a light sensor, a proximity sensor, and/or a temperature sensor, so that the observational data comprise respectively GPS data, ambient sound data, acceleration data, compass data, gyroscopic data, light data, proximity data, and or temperature data.

In an embodiment, at least two sensors of said plurality of sensors are arranged for collecting observational data, wherein the central processing unit is arranged for combining contextual data received from said at least two sensors. Such may increase a reliability of determining or classifying a context of said user.

In an embodiment, at least one sensor of said plurality of sensors is arranged for collecting user-generated social data.

In an embodiment, the plurality of sensors comprises a microphone arranged for recording a sound of the user, and/or a touch-sensitive structure for recording touch-generated information of the user. As a result, the user-generated social data may comprise respectively data obtained from sensor data, e.g. sound data, generated via the user's device and/or data obtained from tactile inputs generated by the user. Alternatively or additionally, as a result the user-generated social data may comprise senor data, e.g. sound data, generated by the user, and/or touch-generated data generated by the user.

In an embodiment, the dataset of personalised data comprises said user-generated social data.

In an embodiment, the dataset of personalised data comprises data obtained from open data and/or social data initiatives, such as Facebook Open Graph, other open source data providers, and/or proprietary data providers. Such open data and/or social data initiatives may be publicly available. Preferably, such open data and/or social data initiatives contain, at least partly, data that are not generated by the user. By using data not generated by the user of the at least one mobile computing device, a bias resulting from biased user-generated data may be decreased.

In an embodiment, the system comprises a further mobile computing device not used by said user, wherein the dataset of personalised data is further based on contextual data generated by said further computing device. In that way, a bias resulting from user-generated data may be decreased.

In an embodiment, the central processing unit is arranged for processing, normalizing, and/or classifying the contextual data.

In an embodiment, the central processing unit is arranged for processing, normalising, and/or classifying the personalised data.

In an embodiment, the processing unit is arranged for allowing, or requesting, a user to assign a class and/or label to the contextual data, preferably after said contextual data are received by the central processing unit.

Preferably, a method according to the invention is carried out by means of a system according to the invention.

According to an aspect, there is provided a computer program product for, when run on said mobile computing device and/or on said central processing unit, carrying out a method according to the invention.

Further advantageous embodiments and features are described in the subclaims and with respect to the appended drawings.

### Brief description of the drawings

The invention will be described in more detail with respect to the drawings illustrating some preferred embodiments of the invention, wherein:
Figure 1 shows a schematic representation of a system in an embodiment according to the invention;
Figure 2 shows a schematic representation of a system in an embodiment according to the invention;
Figure 3 illustrates an example of training and evolution steps;
Figure 4 shows an example of classifier training on a smart-phone; and
Figure 5 shows an example of a smart-phone spotting an opportunity, and improvement.

### Detailed description

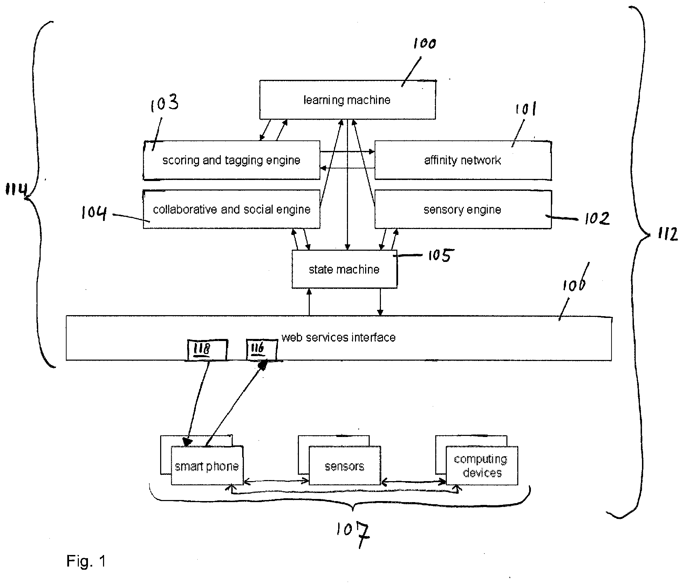

Figure 1 shows a schematic representation of a system 112 in an embodiment according to the invention. Figure 1 shows generally applicable components of the system 112. The system 112 comprises a least one smart-phone sensory device 107, or an other mobile computing device, capable of communicating with a web service interface 106 using wireless and mobile protocols and transmission/receiving means and networks. Such protocols, networks, and means are generally known as such in the art, and will therefore not be described in further detail here. Preferably, the system comprises a plurality of mobile computing devices 107.

At least one of the mobile computing devices of said plurality of mobile computing devices 107 is provided with a plurality of sensors arranged for collecting contextual data of a user of the mobile computing device 107. The term "contextual data" may be defined as the combination of both observational data, thus sensory data, and user-generated social data. As such the term "contextual data" may be defined as comprising both sensory context and social context. The term "context" may be interpreted broadly. It may comprise any information that can be used to characterize the situation of an entity or user.

At least one sensor of said plurality of sensors may be arranged for collecting observational data. The plurality of sensors may e.g. comprise a GPS sensor, an ambient sound sensor, an accelerometer, a digital compass, a gyroscope, a light sensor, a proximity sensor, and/or a temperature sensor. As a result, the observational data may comprise respectively GPS data, ambient sound data, acceleration data, compass data, gyroscopic data, light data, proximity data, and or temperature data.

At least one sensor of said plurality of sensors may be arranged for collecting user-generated social data. The plurality of sensors may e.g. comprise a microphone arranged for recording a sound of the user, and/or may comprise a touch-sensitive structure for recording touch-generated information of the user. As a result, the user-generated social data may comprise respectively data obtained from audio data generated by the user and/or data obtained from tactile inputs generated by the user.

In the system 112, sensory context data may be read and sent from a mobile computing device 107 to the central processing unit 114. Such a central processing unit is comprised by the embodiment of the system 112. Thus, these computing devices 107 are used to gather sensory data. Data may be gathered at regular intervals and/or at specific conditions. Such intervals and/or conditions may be determined by the central processing unit, in particular by a centralized finite state machine 105 of the central processing unit, and/or autonomously by a mobile computing device 107. The central processing unit comprises receiving means 116 for receiving said collected contextual data

The central processing unit may, in an embodiment, comprise a learning machine 100, an affinity network 101, a sensory engine 102, a scoring and tagging engine 103, a collaborative and social engine 104, a state machine 105, and/or a web interface 106. It is noted that the term "engine" or "machine" as used herein may refer to a part of the central processing unit that e.g. is arranged for performing a specific function or task, or may e.g. refer to the central processing unit, or a part thereof, when it is performing a specific function or task. The finite state machine 105 may, more in general, be formed by a pre-processing part 105 of the central processing unit. The learning machine 100 may, more in general, be formed by a self-learning part 105 of the central processing unit. The sensory engine 102 may, more in general, be formed by a part 102 of the central processing unit that is arranged for processing observational data or, in other words, sensory data. The collaborative and social engine 104 may, more in general, be formed by a part 104 of the central processing unit that is arranged for processing user-generated social data.

The finite state machine 105, or the preprocessing part 105, may be arranged to perform a first classification of the contextual data, which data may e.g. comprise information on events, acceptors or recognizers, in order to trigger a certain condition. Said condition may then be fed back to the computing device 107 for action, and/or to the collaborative and social engine 104 and/or the sensory engine 102 for further processing. All, or part of, the sensory data received by the receiver 116 may be processed and normalized for analysis by the sensory engine 102. All, or part of, the social data may be processed and normalized for analysis by the collaborative and social engine 104. Preferably, contextual datasets are normalised, e.g. by means of the preprocessing part 105, by performing a first batch of real-time identification of said data and classification of said data. Fast fourier transform (FFT) calculation may be used therefore.

The system 112 comprises a memory structure comprising a dataset of personalised data. Such memory structure may be formed by a memory of the central processing unit. The dataset of personalised data may be personalised to a user of a specific mobile computing device 107. The dataset of personalised data may comprise data obtained from open data and social data initiatives, such as Facebook Open Graph, other open source data providers, and proprietary data providers. Hence, the dataset of personalised data may comprise information of social peers of said user of said specific mobile computing device 7. The collaborative and social engine 104, or the part 104 of the central processing unit that is arranged for processing user-generated social data, may be arranged for collecting social data of peers of said specific user. As the collaborative engine plugs into the collective knowledge database of other social peers, the system may be regarded as a distributed system. Additionally, or alternatively, the dataset of personalised data that is personalised to the user, may comprise user-generated social data.

A purpose of the collaborative and social engine 104 may be to process raw social data into object-attribute modelled data for further processing. Similarly, a purpose of the sensory engine 102 may be to process raw observational data into object-attribute modelled data for further processing. Thus, e.g., the central processing unit may be arranged for processing, normalizing, and/or classifying the contextual data, in this example the observational data.

Outputs from both engines 102, 104 may be received by the learning machine 100. The learning machine 100 may be regarded as a semi-supervised machine learning system. The learning machine 100 may be arranged for running algorithms to perform pattern matching, sentiment analysis, data mining, and/or knowledge discovery in a database (KDD). The learning machine may take the processed data from the collaborative and social engine 104, and from the sensory engine 102, as its primary input. The scoring and tagging engine 103 may be arranged for feeding back to the learning machine, in order to assign weights and scores to tags, attributes and links between attributes and objects. Additionally, or alternatively, the scoring and tagging engine 103 may be arranged for building an affinity network 101. Such an affinity network may be comprised by the dataset of personalised data. The affinity network may facilitate making recommendations, accepting tag-based search queries, and/or performing social network analysis. The outcome of this set of algorithms is an accurate set of profiled data that is in constant evolution.

By arranging the system for allowing, or requesting, classifying of user-generated social data by the user himself or herself, a semi-supervised system can be provided. Thus, improved classifier training, i.e. training the central processing unit to successfully classify contextual data, can be realised. Preferably, sensory data is considered as preferred data, over social or collaborative data. Hence, when making recommendations, sensory data may be given a greater weight than social or collaborative data.

In this way, the central processing unit may be arranged, when running an algorithm, for combining information from the personalised dataset with the received contextual data, in order to obtain a personalised recommendation for the user of a mobile computing device 107. Thus, the system of figure 1 can be arranged for making personalised recommendations to a user of a mobile computing device. The central processing unit 114 may be provided with transmitting means 118 that are arranged for transmitting the personalised recommendation to the user of the mobile computing device 107.

By means of the learning machine 100, the central processing unit 114 may be arranged for checking follow-up of the transmitted recommendation by the user. Thereto, a transmitted recommendation may be combined with contextual data received by the central processing unit 114 after transmitting said recommendation. Hence, it may be determined whether the recommendation was followed-up by the user. The learning machine 105 may further be arranged for basing a further recommendation at least partly on said checked follow-up. The central processing unit 114 may thus be provided with a self-learning algorithm. The system 112, 212 may thus be designed to take contextual data as a core element in providing a personalized experience of an automated interaction with the system and its software, by means of which software one or more algorithms are implemented

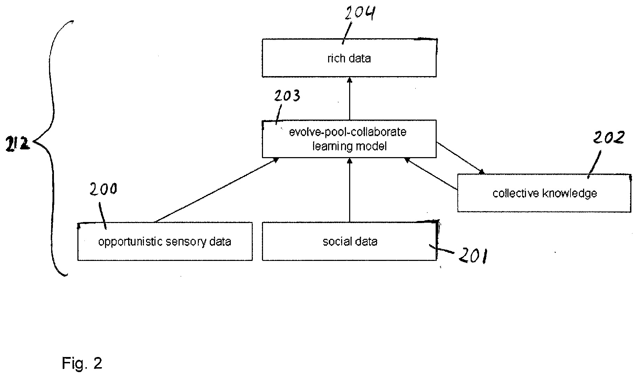

Figure 2 shows a schematic representation of a system 212 in an embodiment according to the invention. The representation of figure 2 may be regarded as a high level representation of the system 112. Figure 2 may be regarded as a representation of functionalities of the system 212. Hence, the system 212 may be regarded as, in use, performing one or more, or all, of the functionalities represented in figure 2.

The functions represented in figure 2 may be regarded as an evolutionary evolve-pool-collaborate model. Such a model may form a basis for the system 2. Such a model may offer classifier evolution, model pooling, and/or collaborative inference.

The observational data may comprise opportunistic sensory data 200. Such opportunistic sensory data 200 may be collected from smart-phone sensors, including GPS (Global Positioning System), ambient sound sensor, accelerometer, digital compass, gyroscope, light sensor, proximity sensor, temperature sensor, and/or microphone. The social data 201 may be obtained from open data and social data initiatives, e.g. from Facebook Open Graph, other open source data providers, and/or proprietary data providers. The social data may also be generated by, and obtained from, the user's smart-phone application. The collective knowledge database 202 may comprise a set of meta-data and/or may comprise collective data. The collective database 202 may further comprise classification models that are evolutionary, e.g. due to the distributed character of the model. Such evolutionary character of the classification may e.g. be due to a change in time of classes used during classification. Such combines well with a self-learning property of the system 212. The evolve-pool-collaborate learning model 203 may be used to reduce human supervision of training classifiers and ultimately provide for a scalable, distributed and learning model that generates rich data 204. The term "rich data" may be used to indicated data that are ready to be used to make personalized recommendations personalised to a user, e.g. to propose opportunities to a user or make other profiled user interactions.

The system 112, 212 can be used in various ways. As a first use example, by means of the system 112, 212, a user of a mobile device can be notified via his or her mobile device 107 when interesting people are close to that user, or are entering the same premise where the user is. This can also be used to group people on airplanes, buses or other transit systems in order to make the journey a more interesting experience. For example, a user can check in to a ticketing system of an airline, after which the seat choice will be assigned based on preference matches of the user.

As a further use example, the system 112, 212 may be used for getting a situational awareness information screen when contextual data change. This could be applied e.g. when the user has entered a geographical, or virtual, fence, or when a sensor triggers a particular condition that requires attention of the user. For example, a spouse of the user has left work, and based on average travel times the user is informed with an estimated time of arrival.

As a yet further use example, by means of the system 112, 212, the establishment of dynamically discovered hidden relationships may be enabled. Links between a user and other users may be established. Thus, an "implicit social network", or an affinity network that dynamically changes the affinities, may be realised. Such a network may include links between a user has and any other associated objects and/or attributes. For example, because the user becomes interested in soccer, he might be introduced to new people. As soon as his interest is deteriorating, scores between the user and associated objects relating to soccer are reduced unless other affinities exist between the user and the objects associated to soccer.

As a further use example, the system 112, 212 may enable to get personalized feedback and inspiration, based on vague search concepts. Even if a search query is launched using vague terms and concepts, the results can be personalized to the user. Then, the user is not using traditional keywords to search for results. Instead, the user is discovering relevant context when browsing for concepts in search of inspiration. This is a method that could be used in the field of advertising and proposing of deals. In that respect, the system may be considered as a decision support system for consumers. For example: A user can enter 'I'm hungry' and get personalized data where to eat his or her favourite meal, with whom or at what discount.

As another use example, the system 112, 212 may enable establishing a natural, human-like interaction with an artificial smart-agent on a smart-phone that is able to learn about the user's preferences, behaviour and/or personality. The smart-agent may function as a smart-phone hosted software-extension to the cognitive, visual, auditive, and tactile capabilities of a human being. At the same time, the smart-agent may be able to intelligently process discovery queries, and/or engage in an intelligent conversation with the human user. For example, a user may be alerted that he or she has slept only twenty hours over the past seven days, while he or she spends most of his or her time stationary in a dim-lit room. The smart-agent may offer the user to get some exercise, and/or ask about the origins of the behaviour of the human user.

As yet another use example, by means of the system 112, 212, a user may be presented with profiled information that is recommended given the user's contextual situation and/or real-time situation. This could be used for obtaining a considerable improvement for the advertising industry, where consumers are no longer pushed with irrelevant information but with actionable intelligence, while merchants and advertisers may have a better return on investment.

The system 112, 212 may work as follows. The central processing unit 114 can, more in general, be triggered to make a recommendation, or to adapt a current or recent recommendation, in various ways. In an embodiment, the finite state machine 105 can be triggered by the user's significant sensor change, indicating a contextual change. Alternatively or additionally, the central processing unit 114 can be triggered if one or more influential nodes of the affinity network 101 - a user, an object, or some attributes - indicates a significant deviation in the eigenvector and alpha analysis results. In that respect, the finite state machine may be considered as a trigger-box, which is triggered through multiple interfaces.

The finite state machine 105 may then evaluate what conditions can be triggered, and propagate the condition correspondingly to the sensory device 102, the collaborative and social engine 104, and/or the learning machine 100. This propagation may be subject to queuing principles, using FIFO logic. For example, detecting if the user is in a sleep, or awake, status is useful. However, knowing if the user is asleep at his or her work place, may even be more interesting from a context point of view.

A first step may be the running of the opportunistic sensory data 200 through the sensory engine 102. The sensory engine may be arranged for normalizing and/or analyzing a sample of sensory data, and preferably for returning a recruited classifier. The term "classifier" may refer herein to a portion of contextual data that has been assigned a class, i.e. has been classified. Alternatively, it may refer to the class assigned to said portion of contextual data. The term "recruited classifier" may refer herein to a portion of contextual data that has been classified, or to the assigned class itself, and, moreover, to a situation wherein that classification has been found in order, i.e. has been accepted or, in other words, recruited. The central processing unit may be arranged for carrying out such acceptance or recruitment. Preferably, additionally, such acceptance is carried out by means of the user.

In addition to internal contexts that may be based on the contextual data, there may also be external contexts that are preferably taken into account, such as cultural, legal or reciprocal contexts. For example, drinking a beer in Saudi Arabia is nowadays not allowed. Hence, recommending a user to drink a beer can be regarded as a bad recommendation when the external context indicates that the user is in Saudi Arabia. If a user goes out partying, perhaps the user does not want his or her co-workers to know about this. Then, the user may want to disappear from the recommendation radar. These and many more are all examples of external contexts that provide an ultimate classification correction that may be isolated in the scoring and tagging engine 103. The absence of such correction may bias future classification. Therefore, in an embodiment, the scoring and tagging engine is arranged for correcting a classification based on external contexts. The occurrence of multiple temporary, external contexts in itself should, however, preferably be matched as a pattern by the learning machine 100, in order to provide a predictive character to the overall solution. An example of such a pattern could for example be based on "travelling every month to Saudi Arabia".

The sensory engine 102 may for example determine, based on collected contextual data, that the *lux* mean value is smaller than thirty, that the timestamp is at 3:37am, and that the smart-phone home-screen is off and no movements have been registered since the last ten minutes. The sensory engine 102 may for example determine that the ambient sound level is relatively low, indicating a silent environment. This may mean that a .91 probability score is assigned to the classifier "asleep". This situation, where multiple sensory data input gets combined, is known as multi-modality sensing. It may be used consistently in order to circumvent the sensing context problem. Moreover contextual data obtained by means of multi-modality sensing may be processed by the central processing unit as a vector of features, a feature e.g. representing a contextual data portion. Such may facilitate linear classifier identification. After the sensory engine 102 has identified a sensory classifier to said vector, or a classification model, said classifier or classification model may be fed back to the state machine 105.

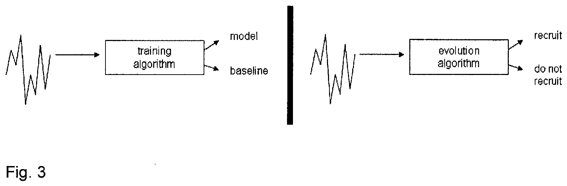

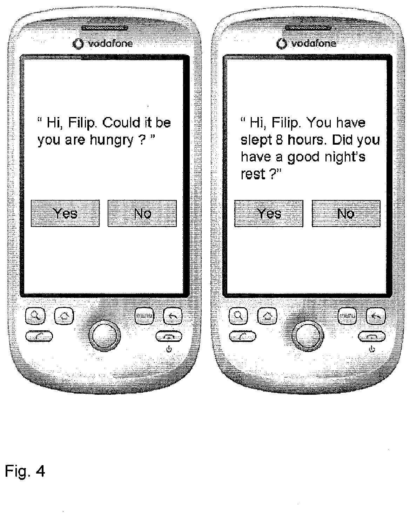

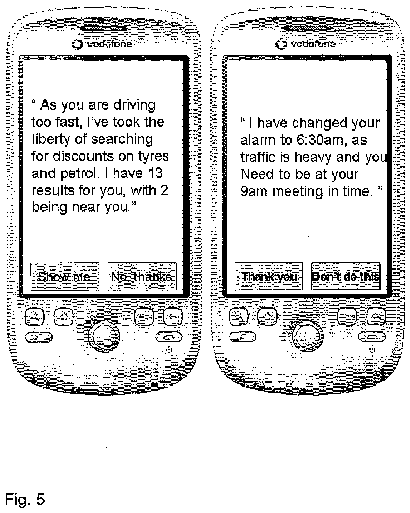

In an embodiment, the central processing unit is arranged for processing, normalizing, and/or classifying the contextual data. In an embodiment, the central processing unit is arranged for processing, normalising, and/or classifying the personalised data. The central processing unit 114 may be arranged for allowing, or requesting, a user to assign a class to contextual data. The user may e.g. be allowed, or requested, to assign a label to contextual data. Such may be performed by means of a question asked to the user. The central processing unit may be arranged for sending such a question to the user. By monitoring the answer to such a question, an assumed classification can be checked by means of the answer of the user. Hence, a trained classifier can be obtained. Training classifiers on a smart-phone preferably requires a human interaction, either a confirmation (so the classifier can be recruited), or a refusal (so the classifier can be corrected, and not recruited). We have found test bodies to respond better to natural questions, rather than technical questions. Therefore, the classifier training is preferably closely incorporated as part of the application's logic, while feeling natural and human. Figure 3 illustrates an example of training and evolution steps. Figure 4 shows an example of classifier training on a smart-phone. Figure 5 shows an example of a smart-phone spotting an opportunity, and improvement.

Preferably, classification models, i.e. ways in which contextual data are classified, are shared between the plurality of mobile computing devices 107. Such classification models may already have been built and optimized by other mobile phones. It is a simple but effective way to increase classification timeliness by minimizing the inference latency. Model sharing, or in other words, model pooling, may boost classification scalability, accuracy, and/or speed by providing a mechanism for fast exploitation of existing models by mobile phones rather than building classifiers from scratch themselves.

In order to reduce low quality in accuracy of sensing data, due to bad sensing contexts, and given multiple users with sensory devices - such as smart-phones - present recording the same event, classification performance may be improved. Such improvement of classification performance may e.g. be achieved by taking into account classification results of multiple devices observing the same event, instead of relying on only individual classification results. Thus, advantage may be taken of the multiple sensing resources around an event and exploit their spatial distribution and context diversity. Each classifier or classification model may be assigned a reliability score.

Both the sensory engine 102 and the collaborative and social engine 104 may produce a first generation of classifiers, which may be referred to as primitives. These primitives may be stored for further processing and/or more high level classification, as can be performed by the central processing unit 114, in particular by the learning machine 100, the scoring and tagging engine 103, and/or the affinity network 101. A confidence score of a primitive may influence the scoring and tagging of a classification model. This evolution of a classification model, or classifier, is herein referenced to as classifier evolution.

An important challenge in training classifiers is to obtain sufficient amount of labelled data for user-supervised training. Data labelling is usually tedious and expensive and real-time labelling is seldom practical since people are averse to being interrupted in order to label data. In essence, labelling data does not scale. Therefore, machine learning algorithms running on mobile phones can not fully rely on supervised learning strategies. In contrast, a fully unsupervised learning process without any human intervention can often latch onto idiosyncrasies of the data and is not guaranteed to model the classes the user might care about. As we are using a semi-supervised model, these classifiers - or more likely classification models - can be offered a user-assigned label, through disguised human-labelling interactions (see e.g. figure 4). These labels may be considered as tags, e.g. processed by means of the scoring and tagging engine 103.

As described above, sensory data may be fed to the sensory engine 102, matching appropriate sensory classifiers. Similarly, social data 201 may be processed by the collaborative and social engine 104. Thereby, the social data may be transcoded into a rich object. Such an object may exert an activity over a subject. Such an object may be provided with a specific set of attributes or properties. For example, a user posts a geo-tagged *Like* score to an Indian restaurant in Paris, using the Facebook social network; which would be transformed into an object (the user and geo-tag), a subject (restaurant), an activity (like), and a set of attributes ("Paris", "Indian restaurant"). Additional tagging may be done through the scoring and tagging engine 103, where the pre-defined attributes are considered as tags within the context of social data. Based on the activity, weighted scores may be assigned to the relation between the user, the subject, and/or respective attributes. These may further be fed to the affinity network 101. After such feeding, the existing scores may be updated instantly.

In an embodiment, continuous social network analysis may be executed by the affinity network 101. In that way, new relationships may be established between objects, attributes, and users. A clustering coefficient may be used to identify the likelihood that two associates of a node are associates themselves. This eventually may result in the uncovering of "hidden relationships". Furthermore, "social circles" may be identified, e.g. by using structural cohesion analysis. Such analysis may group users together based on preferences or similarities. Additionally, eigenvector and alpha analysis may be performed in order to measure the influence of a node in the affinity network. The results may be fed back to the scoring and tagging engine 103. By means of such feeding back, amplified, or reduced, scoring results may be build. Thereby, the training time for the system to perform efficiently may be limited. In that respect, collective knowledge 202 may be gathered that in turn is used to improve the evolve-pool-collaborate learning model 203 to produce rich data 204.

Analyzing sensory data may be carried out in a distributed way. E.g., the central processing unit may be arranged for carrying out a split-level classification. In such a classification, parts of classifier analysis, e.g. resulting in primitives, can be outsourced to the mobile device. Other analysis may be done by means of the central processing unit. Such other analysis may be regarded as back-end analysis. Thus, split-level classification may profit from the processing capabilities of the central processing unit. Typically, the central processing unit has more processing capabilities than a mobile device. More in general, the invention can be seen as encompanying any distributed system which comprises any combination of local processing and central processing between two extremes, namely a centralised model wherein the functionality of the mobile computing device is reduced to mainly a user interface and all or nearly all data processing occurs on the central processing unit; and a distributed model wherein use is made as much as possible of the processing capabilities of the respective mobile computing device used by the user (which may be different for different mobile devices making use of the system/method of the invention). The former may have the advantage of being equally upgradable; the latter may have the advantage of reducing data traffic and offering also a (limited) functionality when the device is offline.

The learning machine 100 may rely on the affinity network 101 and the state machine 105 of its users. The learning machine itself may be arranged for storing a database of classifiers and/or classification models. Such database may be used to maintain the confidence scores of these classifiers, or classification models. The learning machine is preferably individualized to each user. However, its knowledge database may be considered to be built upon the collective knowledge of all users. The learning machine may be considered to be a final and highest level of classifier classification and scoring, where deep data mining is performed in order to disentangle the underlying factors of variation that explain the observed data. The learning machine 100 may also be referenced to as a hybrid recommender system. It may optionally use k-NN algorithms to quickly classifying objects based on the properties of its closest neighbours in the feature space. In addition, also Pearson correlation and Rocchio relevance filtering may be performed to identify social influence through social network analysis feedback from the affinity network 101, and preference indicators respectively.

The learning machine may be arranged for carrying out continuous ancestral passes in order to sample down the model from the top level feature activations, when triggered by the state machine 105. Such may be applied to enable deep learning, and to build belief nets. In that respect, one could state the learning machine 100 assumes a similar approach as a restricted Boltzmann machine to model each new layer of higher level features. The adaptation of the traditional deep learning approach, however in nature optionally unsupervised, may alternatively be semi-supervised in order to increase the accuracy. Such may be a direct consequence of the scoring and tagging engine 103, affinity network 101, and collaborative and social engine 104 that may enforce the use of labelling.

A user may thus use a semi-supervised learning machine 100. Thus, the central processing unit may be arranged for seeking classification confirmation in the form of a question (see figure 4). In return, empirical data, optionally accompanied with a corresponding classification model, may be presented to a user in order to keep the engagement of a user. Optionally, there may also be provided useful information that reinforces, or changes, a human trait (see figure 5).

An embodiment of a method according to the invention may be carried out e.g. by means of a system 112, 212. Such a method may be arranged for making personalised recommendations to a user of a mobile computing device 107. Said mobile computing device 107 may be comprised by a system 112, 212 that further comprises a central processing unit 114. The system may further comprise a memory structure or have access to a memory structure. Said memory structure may comprise a dataset of personalised data personalised to said user. The method may comprise collecting contextual data by means of a plurality of sensors with which the mobile computing device 107 is provided. The method may further comprise receiving said collected contextual data by means of receiving means 116 of the central processing unit 114. The method may further comprise combining, by means of the central processing unit 114, information from the personalised dataset with the received contextual data, in order to obtain a personalised recommendation for the user of the mobile computing device 107. The method may further comprise transmitting the personalised recommendation to the user of the mobile computing device, in particular to the at least one mobile computing device 7 used by said user, by means of transmitting means 118 with which the central processing unit 114 is provided. The method may comprise checking, by means of the central processing unit 114, follow-up of the transmitted recommendation by the user, by comparing the transmitted recommendation with contextual data received by the central processing unit 116 after transmitting the recommendation. The method may further comprise basing, by means of the central processing unit 114, a further recommendation at least partly on said checked follow-up.

Thus, embodiments relating to semi-supervised collaborative and opportunistic, contextual mobile sensing have been described. With the increasing ubiquity of internet-accessing smart phones, it may thus be possible to offer personalized, context-sensitive recommendations. This is a particularly difficult area of research as mobile data is more complex than recommender systems often have to deal with. Mobile data can be heterogeneous, noisy, may requires spatial and/or temporal auto-correlation, and/or may have validation and/or generality problems. The disclosed semi-supervised collaborative and/or opportunistic, contextual mobile sensing aims to simplify this by combining multiple sources of data. In such combining, a Darwinist principle may be employed so that the quality of the data is gradually refines, while low quality data is discarded.

In analyzing user-generated data, the inventor found that humans typically suffer from common defects, including self-deception, cognitive dissonance, confabulations and many more cognitive biases that prevent humans from producing trustworthy information, which in turn prevents accurate behavioural analysis of a human. Clearly, this sociological approach is biased, yet it is omnipresent given the booming social network offering, such as Facebook, Linkedln, and many more. Therefore, the inventor has found great merit in combining sociological principles with empirical, or observational, data. Such may be regarded as taking an anthropological stance. Applying these empirical principles in an automated manner by means of mobile devices, may be applied in the field of mobile sensing.

Mobile sensing in an opportunistic way, means that the user does not need to interfere or approve a sensory poll of data, i.e. does not need to interfere or approve with the collecting of contextual data. In view of the psychological insights mentioned previously, such opportunistic sensing greatly enhances the user experience, while it also increases the trustworthiness of the polled sensory data. Opportunistic sensing does present a resource impact on both CPU and battery of a mobile device. Therefore, there is a need for more intelligent sensing methods that are devised in order to keep the sensing a user-friendly experience while preserving the mobile resources as much as possible. Thus, sensing with smart-phones may present several technical challenges that are to be surmounted. For example, the smart-phone's sensing context and limited resources that are currently present on smart-phones, such as battery and computational capabilities, may form such a challenge. However, manufacturing and use of a system 112, 212 is still possible. Moreover, smart-phone sensing is an emerging field that enables significant advances in mobile computing, machine learning, and systems design, as for example a disclosed system.

Thus, techniques are described for building behavioural and contextual information sets, and providing this to people and computing devices in various ways. In at least some situations, the techniques include enabling multiple people with a common profile to interact in various ways, such as via devices capable of communications (e.g. cellular telephones, computing devices with wired and/or wireless communications capabilities, etc.). In addition, the techniques may enable the creation and management of personalized recommendations, collective intelligence data sets, and ways to facilitate intelligent interaction between consumers and merchants. Techniques may be used to perform predictive profiling, based on mobile sensory data and social data, hereby compensating for biased social graphs, while building more accurate user profiles. Furthermore, techniques may enable making "magic moments" where people can experience intelligent interactions with a computing device, providing information that helps in human and social decision-making.

## Claims

1. System for making personalised recommendations to a user of a mobile computing device, the system comprising at least one mobile computing device (107) used by said user, a central processing unit (114), and a memory structure comprising a dataset (204) of personalised data personalised to said user, the at least one mobile computing device (107) being provided with a plurality of sensors arranged for collecting contextual data, the mobile computing device being arranged for collecting observational data in an opportunistic way, without interference of said user, by means of at least one sensor of said plurality of sensors, the central processing unit (114) comprising receiving means (116) for receiving said collected contextual data, the central processing unit further being arranged for combining information from the personalised dataset with the received contextual data, in order to obtain a personalised recommendation for the user of the mobile computing device, the central processing unit further being provided with transmitting means (118) that are arranged for transmitting the personalised recommendation to the user of the mobile computing device, in particular to the at least one mobile computing device used by said user, **characterized in that** the central processing unit (114) is arranged for checking follow-up of the transmitted recommendation by the user by comparing the transmitted recommendation with further contextual data received by the central processing unit after transmitting the recommendation, said further contextual data comprising further observational data (200) collected in an opportunistic way without interference of said user by means of said at least one sensor, and wherein the central processing unit is further arranged for basing a further recommendation at least partly on said checked follow-up.

2. System according to claim 1, wherein the plurality of sensors comprises a GPS sensor, an ambient sound sensor, an accelerometer, a digital compass, a gyroscope, a light sensor, a proximity sensor, and/or a temperature sensor, so that the observational data comprise respectively GPS data, ambient sound data, acceleration data, compass data, gyroscopic data, light data, proximity data, and/or temperature data.

3. System according to claim 1 or 2, wherein at least two sensors of said plurality of sensors are arranged for collecting observational data (200), wherein the central processing unit is arranged for combining contextual data received from said at least two sensors.

4. System according to one of claims 1-3, wherein at least one sensor of said plurality of sensors is arranged for collecting user-generated social data (201).

5. System according to claim 4, wherein the plurality of sensors comprises a microphone arranged for recording a sound of the user, and/or a touch-sensitive structure for recording touch-generated information of the user, so that the user-generated social data comprises respectively data obtained from sensor data generated via the user's device and/or data obtained from tactile inputs generated by the user.

6. System according to claim 4 or 5, wherein the dataset (204) of personalised data comprises said user-generated social data.

7. System according to one of claims 1-6, wherein the dataset (204) of personalised data comprises data obtained from open data and social data initiatives, such as Facebook Open Graph, other open source data providers, and/or proprietary data providers.

8. System according to one of claims 1-7, comprising a further mobile computing device not used by said user, wherein the dataset (204) of personalised data is further based on contextual data generated by said further computing device.

9. System according to one of claims 1-8, wherein the central processing unit is arranged for processing, normalizing, and/or classifying the contextual data.

10. System according to one of claims 1-9, wherein the central processing unit is arranged for processing, normalising, and/or classifying the personalised data.

11. System according to one of claims 1-10, wherein the central processing unit is arranged for allowing, or requesting, a user to assign a class and/or label to the contextual data after said contextual data are received by the central processing unit.

12. Method for making personalised recommendations to a user of a mobile computing device (107), said device being comprised by a system (112) that further comprises a central processing unit (114) and a memory structure comprising a dataset (204) of personalised data personalised to said user, the method comprising the steps :
- collecting contextual data by means of a plurality of sensors with which the mobile computing device is provided, the contextual data comprising observational data collected in an opportunistic way, without interference of said user, by means of at least one sensor of said plurality of sensors;
- receiving said collected contextual data by means of receiving means (116) of the central processing unit;
- combining, by means of the central processing unit, information from the personalised dataset with the received contextual data, in order to obtain a personalised recommendation for the user of the mobile computing device;
- transmitting the personalised recommendation to the user of the mobile computing device, in particular to the at least one mobile computing device used by said user, by means of transmitting means (118) with which the central processing unit is provided;
**characterized in that** the method further comprises the steps:
- collecting further contextual data by means of the plurality of sensors with which the mobile computing device (107) is provided, the further contextual data comprising further observational data collected in an opportunistic way, without interference of said user, by means of at least one sensor of said plurality of sensors;
- checking, by means of the central processing unit (114), follow-up of the transmitted recommendation by the user, by comparing the transmitted recommendation with the further contextual data received by the central processing unit after transmitting the recommendation; and
- basing, by means of the central processing unit, a further recommendation at least partly on said checked follow-up.

13. Method according to claim 12, carried out by means of a system according to one of claims 1-11.

14. Computer program product for, when run on the system according to one of claims 1-11, carrying out a method according to claim 12.

## Patentansprüche

1. System zur Abgabe personalisierter Empfehlungen für einen Benutzer einer mobilen Computervorrichtung, wobei das System zumindest eine mobile Computervorrichtung (107) umfasst, welche durch den erwähnten Benutzer benutzt wird, eine Zentraleinheit (114), und eine Speicherstruktur, welche einen Datensatz (204) personalisierter Daten umfasst, personalisiert für den erwähnten Benutzer, wobei die zumindest eine mobile Computervorrichtung (107) mit einer Vielzahl von Sensoren ausgestattet ist, angeordnet, um Kontextdaten zu sammeln, wobei die mobile Computervorrichtung angeordnet ist, um Beobachtungsdaten auf eine opportunistische Art zu sammeln, ohne Eingreifen des erwähnten Benutzers, mittels zumindest eines Sensors der erwähnten Vielzahl von Sensoren, wobei die Zentraleinheit (114) Empfangsmittel (116) zum Empfangen der erwähnten gesammelten Kontextdaten umfasst, und die Zentraleinheit ferner angeordnet ist, um Information vom personalisierten Datensatz mit den empfangenen Kontextdaten zu kombinieren, um eine personalisierte Empfehlung für den Benutzer der mobilen Computervorrichtung zu erhalten, wobei die Zentraleinheit ferner mit Übertragungsmitteln (118) ausgestattet ist, welche angeordnet sind, um die personalisierte Empfehlung an den Benutzer der mobilen Computervorrichtung zu übertragen, insbesondere an die zumindest eine mobile Computervorrichtung, die durch den erwähnten Benutzer benutzt wird, **dadurch gekennzeichnet, dass** die Zentraleinheit (114) angeordnet ist, um die Befolgung der übertragenen Empfehlung durch den Benutzer zu kontrollieren, indem die übertragene Empfehlung mit weiteren Kontextdaten verglichen wird, die durch die Zentraleinheit nach Übertragung der Empfehlung erhalten werden, wobei die erwähnten weiteren Kontextdaten weitere Beobachtungsdaten (200) umfassen, welche auf opportunistische Art ohne Eingreifen des erwähnten Benutzers mittels des erwähnten zumindest einen Sensors gesammelt wurden, und wobei die Zentraleinheit ferner angeordnet ist, um eine weitere Empfehlung zumindest teilweise auf die erwähnte kontrollierte Befolgung zu basieren.

2. System nach Anspruch 1, wobei die Vielzahl von Sensoren einen GPS-Sensor, einen Umgebungsgeräuschsensor, einen Beschleunigungsmesser, einen digitalen Kompass, ein Gyroskop, einen Lichtsensor, einen Näherungssensor, und/oder einen Temperatursensor umfasst, sodass die Beobachtungsdaten respektive GPS-Daten, Umgebungsgeräuschdaten, Beschleunigungsdaten, Kompassdaten, gyroskopische Daten, Lichtdaten, Näherungsdaten und/oder Temperaturdaten umfassen.

3. System nach Anspruch 1 oder 2, wobei zumindest zwei Sensoren der erwähnten Vielzahl von Sensoren angeordnet sind, um Beobachtungsdaten (200) zu sammeln, wobei die Zentraleinheit angeordnet ist, um Kontextdaten, empfangen von den erwähnten zumindest zwei Sensoren, zu kombinieren.

4. System nach einem der Ansprüche 1 bis 3, wobei zumindest ein Sensor der erwähnten Vielzahl von Sensoren angeordnet ist, um nutzergenerierte soziale Daten (201) zu sammeln.

5. System nach Anspruch 4, wobei die Vielzahl von Sensoren ein Mikrofon umfasst, angeordnet, um ein Geräusch vom Benutzer aufzunehmen, und/oder eine berührungsempfindliche Struktur zum Aufnehmen berührungsgenerierter Information vom Benutzer, sodass die nutzergenerierten sozialen Daten Daten umfassen, die respektive von Sensordaten erhalten werden, die durch die Vorrichtung des Benutzers generiert wurden, und/oder Daten, die von taktilen Eingaben generiert durch den Benutzer erhalten werden.

6. System nach Anspruch 4 oder 5, wobei der Datensatz (204) personalisierter Daten die erwähnten nutzergenerierten sozialen Daten umfasst.

7. System nach einem der Ansprüche 1 bis 6, wobei der Datensatz (204) personalisierter Daten Daten umfasst, welche aus offenen Daten- und sozialen Dateninitiativen erhalten werden, wie Facebook Open Graph, andere Anbieter von quelloffenen Daten, und/oder Anbieter von urheberrechtlich geschützten Daten.

8. System nach einem der Ansprüche 1 bis 7, welches eine weitere mobile Computervorrichtung umfasst, die durch den erwähnten Benutzer nicht benutzt wird, wobei der Datensatz (204) von personalisierten Daten ferner auf Kontextdaten basiert ist, die durch die erwähnte weiterer Computervorrichtung generiert werden.

9. System nach einem der Ansprüche 1 bis 8, wobei die Zentraleinheit angeordnet ist, um die Kontextdaten zu verarbeiten, zu normieren und/oder zu klassifizieren.

10. System nach einem der Ansprüche 1 bis 9, wobei die Zentraleinheit angeordnet ist, um die personalisierten Daten zu verarbeiten, zu normieren und/oder zu klassifizieren.

11. System nach einem der Ansprüche 1 bis 10, wobei die Zentraleinheit angeordnet ist, um es einem Benutzer zu erlauben oder einen Benutzer aufzufordern, den Kontextdaten eine Klasse und/oder ein Etikett zuzuweisen, nachdem die erwähnten Kontextdaten durch die Zentraleinheit empfangen werden.

12. Verfahren zur Abgabe personalisierter Empfehlungen für einen Benutzer einer mobilen Computervorrichtung (107), wobei die erwähnte Vorrichtung in einem System (112) enthalten ist, welches ferner eine Zentraleinheit (114) und eine Speicherstruktur umfasst, die einen Datensatz (204) von personalisierten Daten personalisiert für den erwähnten Benutzer umfasst, wobei das Verfahren folgende Schritte umfasst:
- Sammeln von Kontextdaten mittels einer Vielzahl von Sensoren, mit denen die mobile Computervorrichtung ausgestattet ist, wobei die Kontextdaten Beobachtungsdaten umfassen, die auf opportunistische Art gesammelt wurden, ohne Eingreifen des erwähnten Benutzers, mittels zumindest eines Sensors der erwähnten Vielzahl von Sensoren;
- Empfangen der erwähnten gesammelten Kontextdaten mittels Empfangsmitteln (116) der Zentraleinheit;
- Kombinieren, mittels der Zentraleinheit, von Information vom personalisierten Datensatz mit den empfangenen Kontextdaten, um eine personalisierte Empfehlung für den Benutzer der mobilen Computervorrichtung zu erhalten;
- Übertragen der personalisierten Empfehlung an den Benutzer der mobilen Computervorrichtung, insbesondere an die zumindest eine mobile Computervorrichtung, die durch den erwähnten Benutzer benutzt wird, mittels Übertragungsmitteln (118), mit denen die Zentraleinheit ausgestattet ist;
**dadurch gekennzeichnet, dass** das Verfahren ferner folgende Schritte umfasst:
- Sammeln von weiteren Kontextdaten mittels der Vielzahl von Sensoren, mit denen die mobile Computervorrichtung (107) ausgestattet ist, wobei die weiteren Kontextdaten weitere Beobachtungsdaten umfassen, die auf opportunistische Art gesammelt wurden, ohne Eingreifen des erwähnten Benutzers, mittels zumindest eines Sensors der erwähnten Vielzahl von Sensoren;
- Kontrollieren, mittels der Zentraleinheit (114), der Befolgung der übertragenen Empfehlung durch den Benutzer, indem die übertragene Empfehlung mit den weiteren Kontextdaten verglichen wird, die durch die Zentraleinheit nach Übertragung der Empfehlung erhalten werden; und
- Basieren, mittels der Zentraleinheit, einer weiteren Empfehlung zumindest teilweise auf die erwähnte kontrollierte Befolgung.

13. Verfahren nach Anspruch 12, ausgeführt mittels eines Systems nach einem der Ansprüche 1 bis 11.

14. Computerprogramm zum Ausführen, wenn laufend auf dem System nach einem der Ansprüche 1 bis 11, eines Verfahrens nach Anspruch 12.

## Revendications

1. Système de formulation de recommandations personnalisées à un utilisateur d'un dispositif informatique mobile, le système comprenant au moins un dispositif informatique mobile (107) utilisé par ledit utilisateur, une unité centrale de traitement (114) et une structure de mémoire comprenant un jeu de données (204) de données personnalisées qui sont personnalisées pour ledit utilisateur, l'au moins un dispositif informatique mobile (107) étant pourvu d'une pluralité de capteurs agencés pour recueillir des données contextuelles, le dispositif informatique mobile étant agencé pour recueillir des données observationnelles d'une manière opportuniste, sans interférence dudit utilisateur, au moyen d'au moins un capteur de ladite pluralité de capteurs, l'unité centrale de traitement (114) comprenant un moyen de réception (116) pour recevoir lesdites données contextuelles recueillies, l'unité centrale étant en outre agencée pour combiner des informations du jeu de données personnalisées avec les données contextuelles reçues, afin d'obtenir une recommandation personnalisée pour l'utilisateur du dispositif informatique mobile, l'unité centrale de traitement étant en outre pourvue d'un moyen de transmission (118) agencé pour transmettre la recommandation personnalisée à l'utilisateur du dispositif informatique mobile, en particulier à l'au moins un dispositif informatique mobile utilisé par ledit utilisateur, **caractérisé en ce que** l'unité de traitement centrale (114) est agencée pour contrôler un suivi de la recommandation transmise par l'utilisateur par la comparaison de la recommandation transmise à d'autres données contextuelles reçues par l'unité centrale de traitement après la transmission de la recommandation, lesdites autres données contextuelles comprenant d'autres données observationnelles (200) recueillies d'une manière opportuniste sans interférence dudit utilisateur au moyen dudit au moins un capteur, et dans lequel l'unité centrale de traitement est en outre agencée pour fonder une autre recommandation au moins partiellement sur ledit suivi contrôlé.

2. Système selon la revendication 1, dans lequel la pluralité de capteurs comprend un capteur GPS, un capteur de son ambiant, un accéléromètre, une boussole numérique, un gyroscope, un capteur de lumière, un capteur de proximité, et/ou un capteur de température, de sorte que les données observationnelles comprennent respectivement des données GPS, des données de son ambiant, des données d'accélération, des données de boussole, des données gyroscopiques, des données de lumière, des données de proximité et/ou des données de température.

3. Système selon la revendication 1 ou 2, dans lequel au moins deux capteurs de ladite pluralité de capteurs sont agencés pour recueillir des données observationnelles (200), dans lequel l'unité centrale de traitement est agencée pour combiner des données contextuelles reçues desdits au moins deux capteurs.

4. Système selon l'une des revendications 1 à 3, dans lequel au moins un capteur de ladite pluralité de capteurs est agencé pour recueillir des données sociales générées par l'utilisateur (201).

5. Système selon la revendication 4, dans lequel la pluralité de capteurs comprend un microphone agencé pour enregistrer un son de l'utilisateur, et/ou une structure tactile pour enregistrer des informations générées par un toucher de l'utilisateur, de sorte que les données sociales générées par l'utilisateur comprennent respectivement des données obtenues à partir de données de capteur générées par l'intermédiaire du dispositif de l'utilisateur et/ou des données obtenues à partir d'entrées tactiles générées par l'utilisateur.

6. Système selon la revendication 4 ou 5, dans lequel le jeu de données (204) de données personnalisées comprend lesdites données sociales générées par l'utilisateur.

7. Système selon l'une des revendications 1 à 6, dans lequel le jeu de données (204) de données personnalisées comprend des données obtenues à partir d'initiatives de données ouvertes et de données sociales, comme Facebook Open Graph, d'autres fournisseurs de données de source ouverte et/ou des fournisseurs de données propriétaires.

8. Système selon l'une des revendications 1 à 7, comprenant un autre dispositif informatique mobile qui n'est pas utilisé par ledit utilisateur, dans lequel le jeu de données (204) de données personnalisées est en outre fondé sur des données contextuelles générées par ledit autre dispositif informatique.

9. Système selon l'une des revendications 1 à 8, dans lequel l'unité centrale de traitement est agencée pour traiter, normaliser et/ou classifier les données contextuelles.

10. Système selon l'une des revendications 1 à 9, dans lequel l'unité centrale de traitement est agencée pour traiter, normaliser et/ou classifier les données personnalisées.

11. Système selon l'une des revendications 1 à 10, dans lequel l'unité centrale de traitement est agencée pour permettre, ou demander, à un utilisateur d'assigner une classe et/ou une étiquette aux données contextuelles après la réception desdites données contextuelles par l'unité centrale de traitement.

12. Procédé de formulation de recommandations personnalisées à un utilisateur d'un dispositif informatique mobile (107), ledit dispositif étant compris dans un système (112) qui comprend en outre une unité centrale de traitement (114) et une structure de mémoire comprenant un jeu de données (204) de données personnalisées qui sont personnalisées pour ledit utilisateur, le procédé comprenant les étapes de :
- le recueil de données contextuelles au moyen d'une pluralité de capteurs dont le dispositif informatique mobile est pourvu, les données contextuelles comprenant des données observationnelles recueillies d'une manière opportuniste, sans interférence dudit utilisateur, au moyen d'au moins un capteur de ladite pluralité de capteurs ;
- la réception desdites données contextuelles recueillies au moyen d'un moyen de réception (116) de l'unité centrale de traitement;
- la combinaison, au moyen de l'unité centrale de traitement, d'informations du jeu de données personnalisées avec les données contextuelles reçues, afin d'obtenir une recommandation personnalisée pour l'utilisateur du dispositif informatique mobile ;
- la transmission de la recommandation personnalisée à l'utilisateur du dispositif informatique mobile, en particulier à l'au moins un dispositif informatique mobile utilisé par ledit utilisateur, au moyen d'un moyen de transmission (118) dont l'unité centrale de traitement est pourvue ;
**caractérisé en ce que** le procédé comprend en outre les étapes de :
- le recueil d'autres données contextuelles au moyen de la pluralité de capteurs dont le dispositif informatique mobile (107) est pourvu, les autres données contextuelles comprenant d'autres données observationnelles recueillies d'une manière opportuniste, sans interférence dudit utilisateur, au moyen dudit au moins un capteur de ladite pluralité de capteurs ;
- le contrôle, au moyen de l'unité centrale de traitement (114), du suivi de la recommandation transmise par l'utilisateur, par la comparaison de la recommandation transmise aux autres données contextuelles reçues par l'unité centrale de traitement après la transmission de la recommandation ; et
- le fondement, au moyen de l'unité centrale de traitement, d'une autre recommandation au moins partiellement sur ledit suivi contrôlé.

13. Procédé selon la revendication 12, effectué au moyen d'un système selon l'une des revendications 1 à 11.

14. Produit de programme informatique destiné à, lorsqu'il est exécuté sur le système selon l'une des revendications 1 à 11, effectuer un procédé selon la revendication 12.
